# EUROPÄISCHE PATENTSCHRIFT

(11) **EP 3 415 050 B1**
(45) Veröffentlichungstag und Bekanntmachung des Hinweises auf die Patenterteilung: **29.07.2020**
(21) Anmeldenummer: 18176897.9
(22) Anmeldetag: 11.06.2018
(51) Int. Cl.: A47J 31/18

(54) **TEEAUTOMAT FÜR MEHRERE AUFGÜSSE UND VERFAHREN ZUM BETRIEB EINES SOLCHEN TEEAUTOMATEN**
TEA MACHINE FOR MULTIPLE INFUSIONS AND METHOD OF OPERATING SAME
DISTRIBUTEUR AUTOMATIQUE DE THÉ POUR UNE PLURALITÉ D'INFUSIONS ET PROCÉDÉ DE FONCTIONNEMENT D'UN TEL DISTRIBUTEUR AUTOMATIQUE DE THÉ

(30) Priorität: 12.06.2017 DE 102017112904
(43) Veröffentlichungstag der Anmeldung: 19.12.2018
(73) Patentinhaber: Vorwerk & Co. Interholding GmbH, 42275 Wuppertal (DE)
(72) Erfinder: HAHN, Pia, 58332 Schwelm (DE); BAPAT, Aniket, 40882 Ratingen (DE); TAMM, Steffen, 40219 Düsseldorf (DE); GROOM, Sascha, 48607 Ochtrup (DE); ZILS, Jürgen, 51399 Burscheid (DE)
(74) Vertreter: Cohausz & Florack

(56) Entgegenhaltungen:
- WO-A1-2016/096958

## Beschreibung

Die Erfindung betrifft einen Teeautomaten, eingerichtet zur automatischen Zubereitung eines Teegetränks in einer Brühkammer, mit einer Steuereinrichtung, die dazu eingerichtet ist, den Teeautomaten entsprechend eines Brühprogramms zu steuern, bei dem eine Folge von Aufgüssen mit einer in den Teeautomaten eingefüllten Zutatenportion durchgeführt wird. Weiterhin betrifft die Erfindung ein Verfahren zum Betrieb eines Teeautomaten, insbesondere des zuvor beschriebenen Teeautomaten.

Während Kaffeeautomaten zum automatischen Zubereiten von Kaffeegetränken seit Langem bekannt sind, sind erst in jüngerer Zeit Teeautomaten entwickelt worden, die speziell zur automatischen Zubereitung von Teegetränken vorgesehen sind.

Die Zubereitung von Teegetränken weist einige wichtige Unterschiede gegenüber der Zubereitung von Kaffeegetränken auf. Anders als bei der Zubereitung von Kaffeegetränken, bei der eine Portion Kaffeepulver jeweils immer nur für einen Brühvorgang verwendet wird, eignen sich einige Teesorten, insbesondere grüner Tee, zur Zubereitung mehrerer Aufgüsse mit derselben Zutatenportion. Einige Teetrinker ziehen einen zweiten oder weiteren Aufguss sogar dem ersten Aufguss mit einer Portion Teeblätter vor, da die späteren Aufgüsse mit denselben Teeblättern ein besonderes Aroma entfalten.

Ein Teeautomat, der zur Durchführung mehrerer Aufgüsse mit einer Zutatenportion eingerichtet ist, ist beispielsweise aus der WO 2016/096958 A1 bekannt.

Die Bedienung und Steuerung der aus dem Stand der Technik bekannten Teeautomaten ist für die Zubereitung mehrerer Aufgüsse mit einer Zutatenportion jedoch noch verbesserungswürdig. So muss der Nutzer bisher selbsttätig die Brühparameter festlegen, was einerseits aufwändig ist und andererseits zu Fehleingaben führen kann. Insbesondere kann eine ungünstige Einstellung der Brühparameter dazu führen, dass die Beschaffenheit des zubereiteten Teegetränks nicht den Erwartungen des Nutzers entspricht. Die Einstellung der Brühparameter ist für den Nutzer besonders bei der Zubereitung mehrerer Aufgüsse mit einer Zutatenportion schwierig, da die Beschaffenheit der in den einzelnen Aufgüssen zubereiteten Teegetränke stark variieren kann, auch wenn der Nutzer vor dem ersten Aufguss die seiner Ansicht nach optimalen Brühparameter einstellt.

Vor diesem Hintergrund liegt der vorliegenden Erfindung die Aufgabe zugrunde, einen Teeautomat zur Zubereitung mehrerer Aufgüsse mit einer Zutatenportion zur Verfügung zu stellen sowie ein entsprechendes Verfahren zum Betrieb eines Teeautomaten, mit denen die Zubereitung mehrerer Aufgüsse mit derselben Zutatenportion vereinfacht wird und sich bessere Zubereitungsergebnisse erreichen lassen.

Diese Aufgabe wird bei einem Teeautomaten, eingerichtet zur automatischen Zubereitung eines Teegetränks in einer Brühkammer mit einer Steuereinrichtung, die dazu eingerichtet ist, den Teeautomaten entsprechend eines Brühprogramms zu steuern, bei dem eine Folge von Aufgüssen mit einer in den Teeautomaten eingefüllten Zutatenportion durchgeführt wird, erfindungsgemäß dadurch gelöst, dass die Steuereinrichtung dazu eingerichtet ist, einen Brühparameter für einen Aufguss in der Folge von Aufgüssen abhängig von der Nummer des Aufgusses in der Folge von Aufgüssen einzustellen.

Weiterhin wird die oben genannte Aufgabe erfindungsgemäß gelöst durch ein Verfahren zum Betrieb eines Teeautomaten, insbesondere des zuvor beschriebenen Teeautomaten, bei dem eine Folge von Aufgüssen mit einer in den Teeautomaten gefüllten Zutatenportion durchgeführt wird, bei dem ein Brühparameter für einen Aufguss in der Folge von Aufgüssen abhängig von der Nummer des Aufgusses in der Folge von Aufgüssen eingestellt wird und bei dem der Aufguss entsprechend des eingestellten Brühparameters durchgeführt wird.

Mit dem zuvor beschriebenen Teeautomaten und dem zuvor beschriebenen Verfahren werden Brühparameter für Aufgüsse in einer Folge von Aufgüssen durch die Steuereinrichtung automatisch eingestellt, wodurch die Bedienerfreundlichkeit verbessert wird, da eine manuelle Einstellung oder Anpassung der Brühparameter für die einzelnen Aufgüsse entfallen kann. Die Einstellung von Brühparametern erfolgt zudem abhängig von der jeweiligen Nummer des Aufgusses, so dass die Brühparameter für die einzelnen Aufgüsse in der Folge von Aufgüssen mit derselben Zutatenportion automatisch und individuell eingestellt werden, um jeweils ein gutes Ergebnis des jeweiligen Aufgusses zu erreichen. Es hat sich beispielsweise gezeigt, dass es vorteilhaft ist, den Brühparameter der Brühdauer abhängig von der Aufguss-Nummer einzustellen, um die Beschaffenheit der zubereiteten Teegetränke zu verbessern.

Der Teeautomat ist zur automatischen Zubereitung eines Teegetränks in einer Brühkammer eingerichtet. Zu diesem Zweck weist der Teeautomat insbesondere eine Brühkammer auf sowie eine Steuereinrichtung, die die automatische Zubereitung eines Teegetränks in der Brühkammer steuert. Darüber hinaus weist der Teeautomat noch weitere Komponenten auf, die für die automatische Zubereitung von Teegetränken erforderlich sind. Insbesondere kann der Teeautomat eine oder mehrere der folgenden Komponenten aufweisen: eine Heißwasserversorgung, eine Einfüllöffnung für lose Teeblätter, einen Siebeinsatz und eine Verfahreinrichtung zum Bewegen des Siebeinsatzes in der Brühkammer, eine Ausgabeeinrichtung zur Ausgabe des fertigen Teegetränks aus der Brühkammer.

Unter der automatischen Zubereitung eines Teegetränks wird verstanden, dass der Teeautomat einen Brühvorgang (Aufguss) selbsttätig entsprechend vorgegebener Brühparameter steuert. Insbesondere ist die Steuereinrichtung des Teeautomaten dazu eingerichtet, die Komponenten des Teeautomaten derart anzusteuern, dass ein Aufguss durchgeführt wird.

Die Steuereinrichtung ist dazu eingerichtet, den Teeautomaten entsprechend eines Brühprogramms zu steuern. Unter einem Brühprogramm wird eine Abfolge von Schritten verstanden, die die Durchführung eines oder mehrerer Aufgüsse bewirkt. Die Steuereinrichtung kann beispielsweise einen Mikroprozessor und einen damit verbundenen Speicher umfassen, wobei auf dem Speicher Befehle gespeichert sind, deren Ausführung auf dem Mikroprozessor der Steuereinrichtung die Steuerung des Teeautomaten entsprechend des Brühprogramms bewirkt.

Bei dem Brühprogramm wird eine Folge von Aufgüssen mit einer in den Teeautomaten eingefüllten Zutatenportion durchgeführt. Das Brühprogramm umfasst demnach Schritte, die die Durchführung mehrerer Aufgüsse nacheinander mit derselben in den Teeautomaten eingefüllten Zutatenportion umfassen. Der erste mit einer Zutatenportion durchgeführte Aufguss wird vorliegend als erster Aufguss, der zweite mit derselben Zutatenportion durchgeführte Aufguss als zweiter Aufguss usw. bezeichnet.

Die Steuereinrichtung ist dazu eingerichtet, einen Brühparameter eines Aufgusses einzustellen. Die Einstellung eines Brühparameters für den Aufguss erfolgt demnach automatisch durch die Steuereinrichtung, so dass der Nutzer den Brühparameter für den besagten Aufguss nicht selbst eingeben muss. Beispielsweise kann die Steuereinrichtung dazu eingerichtet sein, den Brühparameter für den Aufguss aus einem Speicher auszulesen, beispielsweise aus einer in dem Speicher gespeicherten Datenbank.

Als Brühparameter für den Aufguss kommen zum Beispiel die Brühdauer t, die Brühtemperatur T, das für den Aufguss in die Brühkammer einzuleitende Wasservolumen V oder andere Parameter in Betracht, die den Aufguss beeinflussen. Die Steuereinrichtung kann auch dazu eingerichtet sein, mehrere Brühparameter, insbesondere mehrere der zuvor genannten Brühparameter für den besagten Aufguss einzustellen.

Die Steuereinrichtung ist dazu eingerichtet, einen Brühparameter eines Aufgusses in der Folge von Aufgüssen abhängig von der Nummer des Aufgusses in der Folge von Aufgüssen einzustellen. Demnach erfolgt die Einstellung des Brühparameters also abhängig davon, an welcher Stelle der Aufguss in der Folge von Aufgüssen angeordnet ist. Auf diese Weise können Brühparameter für die einzelnen Aufgüsse der Folge von Aufgüssen unterschiedlich eingestellt werden. Beispielsweise kann für den ersten Aufguss eine andere Brühdauer eingestellt werden als für den zweiten oder dritten Aufguss.

Die Steuereinrichtung ist vorzugsweise dazu eingerichtet, für mehrere, insbesondere für alle Aufgüsse der Folge von Aufgüssen einen Brühparameter abhängig von der jeweiligen Nummer des betreffenden Aufgusses in der Folge von Aufgüssen einzustellen.

Um den Brühparameter eines Aufgusses abhängig von dessen Nummer in der Folge von Aufgüssen einzustellen, kann die Steuereinrichtung den Wert des Brühparameters beispielsweise aus einer in einem Speicher gespeicherten Tabelle auslesen, in der Werte für den Brühparameter für die einzelnen Aufgüsse (erster Aufguss, zweiter Aufguss usw.) gespeichert sind. Alternativ kann die Steuereinrichtung auch dazu eingerichtet sein, den Brühparameter anhand einer vorgegebenen Berechnungsvorschrift zu berechnen, wobei die Nummer des Aufgusses (zum Beispiel "1" für den ersten Aufguss, "2" für den zweiten Aufguss usw.) einen Eingabewert der Berechnungsvorschrift darstellt.

Bei dem Verfahren wird nach Einstellung des Brühparameters der Aufguss entsprechend dem eingestellten Brühparameter durchgeführt. Wird zum Beispiel für den zweiten Aufguss eine Brühdauer t von 120 s eingestellt, so wird der zweite Aufguss entsprechend mit der eingestellten Brühdauer t von 120 s durchgeführt.

Im Folgenden werden verschiedene Ausführungsformen des Teeautomaten und des Verfahrens beschrieben, wobei die einzelnen Ausführungsformen jeweils sowohl für den Teeautomaten als auch für das Verfahren gelten. Weiterhin können die Ausführungsformen untereinander kombiniert werden.

Bei einer ersten Ausführungsform ist die Steuereinrichtung dazu eingerichtet, die Brühdauer eines Aufgusses in der Folge von Aufgüssen abhängig von der Nummer des Aufgusses in der Folge von Aufgüssen einzustellen. Es wurde erkannt, dass es vorteilhaft ist, insbesondere die Brühdauer der einzelnen Aufgüsse abhängig von der Nummer des jeweiligen Aufgusses einzustellen, um eine gleichbleibende Qualität des beim Aufguss zubereiteten Teegetränks zu erhalten. So laugen zum Beispiel als Zutatenportion in den Teeautomaten eingefüllte Teeblätter von Aufguss zu Aufguss immer weiter aus, so dass bei steigender Aufgussnummer eine längere Brühdauer erforderlich ist, um eine vergleichbare Beschaffenheit des zubereiteten Teegetränks zu erreichen. Durch die Einstellung der Brühdauer abhängig von der Nummer des Aufgusses kann ein solcher Zusammenhang durch die Steuereinrichtung automatisch berücksichtigt werden, so dass ohne Eingriff des Nutzers eine bessere Teegetränkqualität über die einzelnen Aufgüsse erreicht werden kann. Vorzugsweise stellt die Steuereinrichtung die Brühdauer mehrerer Aufgüsse der Folge von Aufgüssen derart ein, dass die Brühdauer zu späteren Aufgüssen zunimmt. Die übrigen Brühparameter des Aufgusses (zum Beispiel Brühtemperatur, Wasservolumen etc.) können konstant gehalten oder ebenfalls variiert werden, vorzugsweise automatisch durch die Steuereinrichtung.

Bei der weiteren Ausführungsform ist die Steuereinrichtung dazu eingerichtet, die Nummer eines Aufgusses mit einer Gesamtzahl der mit der einen Zutatenportion durchzuführenden Aufgüsse zu vergleichen und das Brühprogramm bei Erreichen der Gesamtzahl zu beenden. Auf diese Weise kann die Gesamtzahl der durchzuführenden Aufgüsse automatisch überwacht werden. Insbesondere kann verhindert werden, dass versehentlich über die Gesamtzahl hinaus weitere Aufgüsse durchgeführt werden. Dies ist verbessert die Qualität der hergestellten Teegetränke, da sich eine Zutatenportion abhängig von deren Zusammensetzung und Menge typischerweise für eine bestimmte Gesamtzahl von Aufgüssen eignet und darüber hinausgehend Aufgüsse zu einer schlechteren Teequalität führen würden. Die Gesamtzahl der durchzuführenden Aufgüsse kann beispielsweise von einem Nutzer über eine Nutzerschnittstelle des Teeautomaten vorgegeben oder aus einem Speicher des Teeautomaten ausgelesen werden.

Bei einer weiteren Ausführungsform weist der Teeautomat eine Zutatenportion-Erkennungseinheit auf, die dazu eingerichtet ist, einen Wert für die Sorte und/oder einen Wert für die Menge einer in den Teeautomat eingefüllten Zutatenportion zu bestimmen, und die Steuereinrichtung ist dazu eingerichtet, einen Parameter des Brühprogramms abhängig von dem Wert für die Sorte und/oder von dem Wert für die Menge der Zutatenportion einzustellen. Bei einer entsprechenden Ausführungsform des Verfahrens wird ein Wert für die Sorte und/oder ein Wert für die Menge einer in den Teeautomat eingefüllten Zutatenportion bestimmt und der Brühparameter für den einen Aufguss in der Folge von Aufgüssen wird abhängig von der Nummer des Aufgusses in der Folge von Aufgüssen und abhängig von dem Wert für die Sorte und/oder dem Wert für die Menge eingestellt. Auf diese Weise können Eigenschaften einer in den Teeautomaten eingefüllten Zutatenportion automatisch erkannt und das Brühprogramm kann entsprechend angepasst werden, so dass der Nutzer diese Parameter des Brühprogramms nicht selbst vorgeben muss. Dadurch wird die Bedienung des Teeautomaten vereinfacht und die Gefahr von Fehleingaben durch den Nutzer wird reduziert.

Die Zutatenportionen-Erkennungseinrichtung kann beispielsweise eine Bilderfassungseinrichtung wie zum Beispiel eine Kamera umfassen, die Bilddaten von einer in den Teeautomaten eingefüllten Zutatenportion erfasst. Diese Bilddaten können dann zum Beispiel von der Steuereinrichtung mittels bildverarbeitungstechnischer Methoden analysiert werden, um auf diese Weise die Zusammensetzung der Zutatenportion, insbesondere die Teesorte (zum Beispiel schwarzer Tee, grüner Tee, weißer Tee, Früchtetee etc.) zu bestimmen. Die Zutatenportion kann beispielsweise durch eine Farbanalyse der Bilddaten oder durch die Bestimmung der Teeblattgrößen oder -formen in den Bilddaten erfolgen.

Weiterhin kann auf diese Weise auch ein Wert für die Menge der Zutatenportion bestimmt werden, insbesondere durch Bestimmung der Schüttdichte und/oder des durch die Zutatenmenge eingenommenen Raums, ermittelt über eine Analyse der Bilddaten anhand bildverarbeitungstechnischer Methoden.

Auf diese Weise kann der Teeautomat die in den Teeautomaten eingefüllte Teesorte bzw. die Zutatenmenge automatisch bestimmen und das Brühprogramm entsprechend einstellen.

Alternativ zur Zutatenportion-Erkennungseinheit kann die Steuereinrichtung einen Wert für die Sorte und/oder einen Wert für die Menge einer in den Teeautomat eingefüllten Zutatenportion auch bestimmen, indem eine entsprechende Nutzereingabe über eine Nutzerschnittstelle empfangen wird. Der Nutzer kann beim Einfüllen der Teeblätter zum Beispiel die eingefüllte Teesorte und die eingefüllte Menge an der Nutzerschnittstelle eingeben. Weiterhin sind auch Mischlösungen denkbar, bei der ein Wert für die Sorte der Zutatenportion durch die Zutatenportionen-Erkennungseinrichtung erkannt und ein Wert für die Menge der Zutatenportion über die Nutzerschnittstelle empfangen wird oder umgekehrt.

Die Einstellung eines Parameters des Brühvorgangs kann dadurch erfolgen, dass die Steuereinrichtung abhängig von der (mittels der Zutatenportion-Erkennungseinrichtung oder über die Nutzerschnittstelle) bestimmten Teesorte und/oder Zutatenmenge einen entsprechenden Parameter-Wert aus einer in einem digitalen Speicher gespeicherten Datenbank ausliest.

Bei einer weiteren Ausführungsform ist die Steuereinrichtung dazu eingerichtet, einen Brühparameter eines Aufgusses in der Folge von Aufgüssen abhängig von der Nummer des Aufgusses in der Folge von Aufgüssen und abhängig von dem Wert für die Sorte und/oder von dem Wert für die Menge der Zutatenportion einzustellen. Auf diese Weise wird der Brühparameter nicht nur abhängig von der Nummer des Aufgusses, sondern auch von der zuvor bestimmten Teesorte und/oder Zutatenmenge eingestellt. Beispielsweise kann die beim Aufguss zu verwendende Wassermenge V abhängig von der Menge der Zutatenportion eingestellt werden. Weiterhin können beispielsweise die Brühdauer t und/oder die Brühtemperatur T abhängig von der Teesorte eingestellt werden.

Vorzugsweise kann auch die Abhängigkeit eines Brühparameters von der Nummer des Aufgusses abhängig von der bestimmten Teesorte eingestellt werden. So kann zum Beispiel grüner Tee eine andere Anpassung der Brühzeit abhängig von der Aufguss-Nummer erfordern als weißer Tee.

Bei einer weiteren Ausführungsform ist die Steuereinrichtung dazu eingerichtet, die Gesamtzahl der mit der einen Zutatenportion durchzuführenden Aufgüsse abhängig von dem Wert für die Sorte und/oder von dem Wert für die Menge der Zutatenportionen zu bestimmen. Bei einer entsprechenden Ausführungsform des Verfahrens wird ein Wert für die Sorte und/oder ein Wert für die Menge einer in den Teeautomaten eingefüllten Zutatenportion bestimmt und die Gesamtzahl der mit der einen Zutatenportion durchzuführenden Aufgüsse wird abhängig von dem Wert für die Sorte und/oder den Wert für die Menge bestimmt.

Auf diese Weise kann die Gesamtzahl der Aufgüsse für die Zutatenportion automatisch in geeigneter Weise für die bestimmte Zutatenportion bzw. Zutatenmenge eingestellt werden. Beispielsweise kann die Gesamtzahl der Aufgüsse bei grünem Tee höher gewählt werden als bei schwarzem Tee. Zudem kann die Gesamtzahl auch von der Zutatenmenge abhängen.

Bei einer weiteren Ausführungsform ist die Steuereinrichtung dazu eingerichtet, den Teeautomaten zur Durchführung eines Waschaufgusses (sogenannter Pre-Wash-Aufguss) zum Waschen der Zutatenportionen zu veranlassen, insbesondere als erster Aufguss der Folge von Aufgüssen. Manche Nutzer bevorzugen es, wenn die Teeblätter zunächst vorgewaschen ("aufgeweckt") werden, bevor die eigentliche Zubereitung eines Teegetränks erfolgt. Dazu kann ein Waschaufguss durchgeführt werden, der den Zweck hat, die Teeblätter zu befeuchten und damit die Qualität der nachfolgenden Aufgüsse zu verbessern.

Dieser Waschaufguss wird typischerweise nicht konsumiert; zum Konsum dienen erst die nachfolgenden Aufgüsse. Vorzugsweise wird die für den Waschaufguss in die Brühkammer eingeleitete Wassermenge daher getrennt von der Teegetränkausgabe abgeführt, beispielsweise in einen Abwasserbehälter des Teeautomaten. Entsprechend umfasst der Waschaufguss bei einer nächsten Ausführungsform vorzugsweise folgende Schritte: automatisches Einleiten einer Wassermenge in die Brühkammer und automatisches Abführen der Wassermenge aus der Brühkammer in einen Abwasserbehälter. Bei dem Abwasserbehälter kann es sich beispielsweise um einen Tresterbehälter oder auch um einen gesonderten Abwasserbehälter handeln. Bei einer entsprechenden Ausführungsform des Verfahrens wird als erster Aufguss in der Folge von Aufgüssen ein Waschaufguss durchgeführt, bei dem eine Wassermenge in eine Brühkammer und anschließend aus der Brühkammer in einen Abwasserbehälter geleitet wird.

Der Waschaufguss kann mit gesonderten Brühparametern durchgeführt werden, beispielsweise mit einem speziell für den Waschaufguss vorgegebenen oder bestimmten Wasservolumen und/oder mit einer speziell für den Waschaufguss vorgegebenen oder bestimmten Brühtemperatur.

Bei einer weiteren Ausführungsform weist der Teeautomat eine Entnahme-Erkennungseinrichtung auf, die dazu eingerichtet ist, die Entnahme einer Zutatenportion aus dem Teeautomaten zu detektieren. Beispielsweise kann die Entnahme-Erkennungseinrichtung einen Sensor aufweisen, der die Entnahme eines Siebes oder eines Siebeinsatzes der Brühkammer detektiert. Auf diese Weise kann die Steuereinrichtung feststellen, wenn eine Zutatenportion aus dem Teeautomaten entnommen wurde. Die Steuereinrichtung kann beispielsweise dazu eingerichtet sein, das Brühprogramm zu beenden, wenn die Entnahme einer Zutatenportion aus dem Teeautomaten detektiert wird. Alternativ oder zusätzlich kann ein Zähler für die Nummer des aktuellen Aufgusses in der Folge von Aufgüssen zurückgesetzt werden. Weiterhin kann die Steuereinrichtung dazu eingerichtet sein, bei Feststellung der Entnahme einer Zutatenportion aus dem Teeautomaten ein Spülen der Brühkammer zu veranlassen oder als nächsten Aufguss einen Waschaufguss zu bewirken, um eine nach der Entnahme ggf. neu eingefüllte Zutatenportion zu waschen.

Bei einer weiteren Ausführungsform ist die Steuereinrichtung dazu eingerichtet, den Teeautomaten derart zu steuern, dass das zuvor beschriebene Verfahren oder eine Ausführungsform davon durchgeführt wird. Zu diesem Zweck sind auf einem mit der Steuereinrichtung verbundenen Speicher vorzugsweise Befehle gespeichert, deren Ausführung auf der Steuereinrichtung die Durchführung des Verfahrens veranlassen.

Im Folgenden werden weitere Ausführungsformen 1 bis 10 des Teeautomaten und Ausführungsformen 11 bis 14 des Verfahrens beschrieben. Diese können untereinander und mit den zuvor beschriebenen Ausführungsformen kombiniert werden:
1. Teeautomat, eingerichtet zur automatischen Zubereitung eines Teegetränks in einer Brühkammer, mit einer Steuereinrichtung, die dazu eingerichtet ist, den Teeautomaten entsprechend eines Brühprogramms zu steuern, bei dem eine Folge von Aufgüssen mit einer in den Teeautomaten eingefüllten Zutatenportion durchgeführt wird, dadurch gekennzeichnet, dass die Steuereinrichtung dazu eingerichtet ist, einen Brühparameter für einen Aufguss in der Folge von Aufgüssen abhängig von der Nummer des Aufgusses in der Folge von Aufgüssen einzustellen.
2. Teeautomat nach Ausführungsform 1, dadurch gekennzeichnet, dass die Steuereinrichtung dazu eingerichtet ist, die Brühdauer eines Aufgusses in der Folge von Aufgüssen abhängig von der Nummer des Aufgusses in der Folge von Aufgüssen einzustellen.
3. Teeautomat nach Ausführungsform 1 oder 2, dadurch gekennzeichnet, dass die Steuereinrichtung dazu eingerichtet ist, die Nummer eines Aufgusses mit einer Gesamtzahl der mit der einen Zutatenportion durchzuführenden Aufgüsse zu vergleichen und das Brühprogramm bei Erreichen der Gesamtzahl zu beenden.
4. Teeautomat nach einer der Ausführungsformen 1 bis 3, dadurch gekennzeichnet, dass der Teeautomat eine Zutatenportion-Erkennungseinrichtung aufweist, die dazu eingerichtet ist, einen Wert für die Sorte und/oder einen Wert für die Menge einer in den Teeautomat eingefüllten Zutatenportion zu bestimmen, und dass die Steuereinrichtung dazu eingerichtet ist, einen Parameter des Brühprogramms abhängig von dem Wert für die Sorte und/oder von dem Wert für die Menge der Zutatenportion einzustellen.
5. Teeautomat nach Ausführungsform 4, dadurch gekennzeichnet, dass die Steuereinrichtung dazu eingerichtet ist, einen Brühparameter eines Aufgusses in der Folge von Aufgüssen abhängig von der Nummer des Aufgusses in der Folge von Aufgüssen und abhängig von dem Wert für die Sorte und/oder von dem Wert für die Menge der Zutatenportion einzustellen.
6. Teeautomat nach Ausführungsform 4 oder 5, dadurch gekennzeichnet, dass die Steuereinrichtung dazu eingerichtet ist, die Gesamtzahl der mit der einen Zutatenportion durchzuführenden Aufgüsse abhängig von dem Wert für die Sorte und/oder von dem Wert für die Menge der Zutatenportion zu bestimmen.
7. Teeautomat nach einer der Ausführungsformen 1 bis 6, dadurch gekennzeichnet, dass die Steuereinrichtung dazu eingerichtet ist, den Teeautomaten zur Durchführung eines Waschaufgusses zum Waschen der Zutatenportion zu veranlassen, insbesondere als erster Aufguss der Folge von Aufgüssen.
8. Teeautomat nach Ausführungsform 7, dadurch gekennzeichnet, dass der Waschaufguss umfasst: Einleiten einer Wassermenge in die Brühkammer, Abführen der Wassermenge aus der Brühkammer in einen Abwasserbehälter.
9. Teeautomat nach einer der Ausführungsformen 1 bis 8, dadurch gekennzeichnet, dass der Teeautomat eine Entnahme-Erkennungseinrichtung aufweist, die dazu eingerichtet ist, die Entnahme einer Zutatenportion aus dem Teeautomaten zu detektieren.
10. Teeautomat nach einer der Ausführungsformen 1 bis 9, dadurch gekennzeichnet, dass die Steuereinrichtung dazu eingerichtet ist, den Teeautomaten derart zu steuern, dass ein Verfahren nach einer der Ausführungsformen 11 bis 14 durchgeführt wird.
11. Verfahren zum Betrieb eines Teeautomaten, insbesondere eines Teeautomaten nach einer der Ausführungsformen 1 bis 10, bei dem eine Folge von Aufgüssen mit einer in den Teeautomaten gefüllten Zutatenportion durchgeführt wird, bei dem ein Brühparameter für einen Aufguss in der Folge von Aufgüssen abhängig von der Nummer des Aufgusses in der Folge von Aufgüssen eingestellt wird und bei dem der Aufguss entsprechend des eingestellten Brühparameters durchgeführt wird.
12. Verfahren nach Ausführungsform 11, bei dem ein Wert für die Sorte und/oder ein Wert für die Menge einer in den Teeautomat eingefüllten Zutatenportion bestimmt wird und bei dem der Brühparameter für den einen Aufguss in der Folge von Aufgüssen abhängig von der Nummer des Aufgusses in der Folge von Aufgüssen und abhängig von dem Wert für die Sorte und/oder dem Wert für die Menge eingestellt wird.
13. Verfahren nach Ausführungsform 11 oder 12, bei dem ein Wert für die Sorte und/oder ein Wert für die Menge einer in den Teeautomat eingefüllten Zutatenportion bestimmt wird und bei dem die Gesamtzahl der mit der einen Zutatenportion durchzuführenden Aufgüsse abhängig von dem Wert für die Sorte und/oder dem Wert für die Menge bestimmt wird.
14. Verfahren nach einer der Ausführungsformen 11 bis 13, bei dem als erster Aufguss in der Folge von Aufgüssen ein Waschaufguss durchgeführt wird, bei dem eine Wassermenge in eine Brühkammer und anschließend aus der Brühkammer in einen Abwasserbehälter geleitet wird.

Weitere Merkmale und Vorteile des Teeautomaten und des Verfahrens können der nachfolgenden Beschreibung mehrerer Ausführungsbeispiele entnommen werden, wobei auf die beigefügte Zeichnung Bezug genommen wird.

In der Zeichnung zeigen
- Fig. 1a-b: ein Ausführungsbeispiel des Teeautomaten,
- Fig. 2a-c: einen Verfahrensablauf eines Aufgusses,
- Fig. 3: ein Flussdiagramm eines Ausführungsbeispiels des Verfahrens,
- Fig. 4: ein Beispiel einer auf einem Speicher des Teeautomaten aus Figur 1a gespeicherten Datenbank, und
- Fig. 5: Brühparameter eines Brühprogramms entsprechend einem Ausführungsbeispiel des Verfahrens.

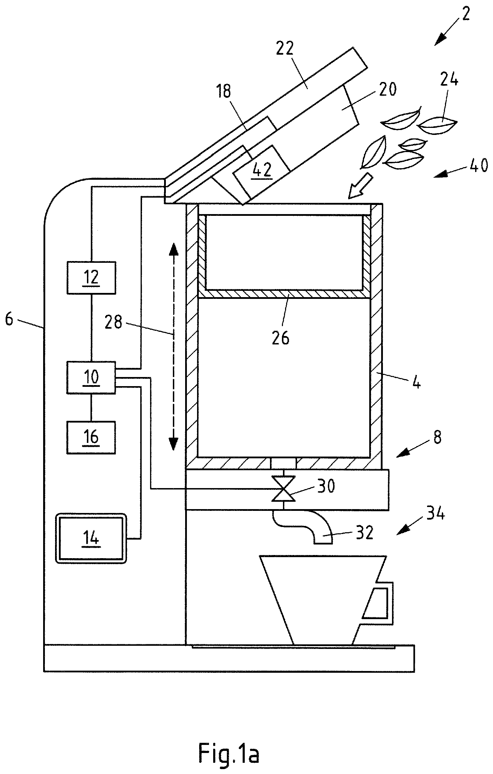

Die Figuren 1a-b zeigen ein Ausführungsbeispiel eines Teeautomaten. Der Teeautomat 2 ist zur automatischen Zubereitung von Teegetränken in einer Brühkammer 4 eingerichtet. Zu diesem Zweck weist der Teeautomat ein Gehäuse 6 mit einer Brühkammeraufnahme 8 auf, in die die Brühkammer 4 einsetzbar ist Der Teeautomat 2 weist also eine entnehmbare Brühkammer 4 auf. Stattdessen könnte die Brühkammer auch integral mit dem Gehäuse 6 ausgebildet sein.

In dem Gehäuse 6 sind weitere Komponenten angeordnet, die für die automatische Zubereitung von Teegetränken erforderlich sind. So weist der Teeautomat 2 eine Steuereinrichtung 10, eine Heißwasserversorgung 12 und eine Nutzerschnittstelle 14 in Form eines Touchscreens auf.

Die Steuereinrichtung 10 ist zur Steuerung des Teeautomaten eingerichtet. Zu diesem Zweck ist auf einem mit der Steuereinrichtung 10 verbundenen Speicher 16 ein Programm mit Befehlen gespeichert, deren Ausführung auf einem Mikroprozessor der Steuereinrichtung 10 eine Steuerung der einzelnen Komponenten des Teeautomaten 2 bewirkt. Beispielsweise kann die Steuereinrichtung 10 zur automatischen Zubereitung eines Teegetränks die Heißwasserversorgung 12 ansteuern, so dass diese zur Durchführung eines Brühvorgangs (Aufgusses) über eine entsprechende Zuleitung 18 heißes Wasser durch einen Verteilerkopf 20 in die Brühkammer 4 leitet.

Weiterhin kann die Steuereinrichtung 10 über die Nutzerschnittstelle 14 die Ausgabe von Nutzerinformationen bewirken, beispielsweise dass ein Aufguss abgeschlossen ist, oder Nutzereingaben empfangen, beispielsweise einen Nutzerbefehl zur Durchführung eines Aufgusses.

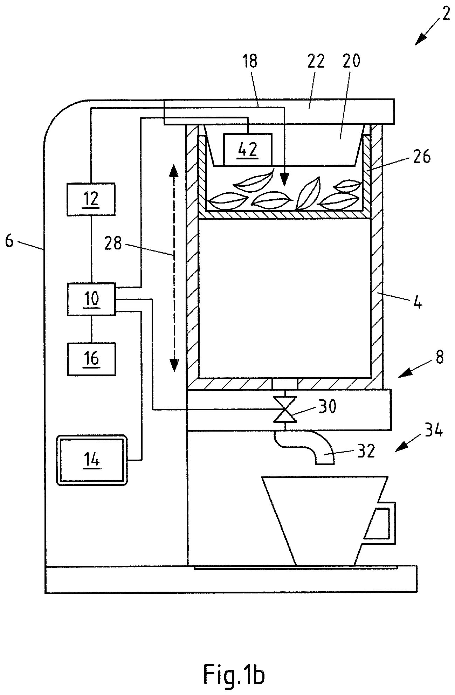

Um mit dem Teeautomaten 2 ein Teegetränk zuzubereiten, kann ein Nutzer den als schwenkbaren Deckel 22 ausgebildeten oberen Teil des Gehäuses 6 wie in Figur 1a gezeigt nach oben klappen, so dass die Brühkammer 4 von oben zugänglich ist. Der Nutzer kann dann eine Zutatenportion, insbesondere eine Portion loser Teeblätter 24, in einen Siebeinsatz 26 geben, der in die Brühkammer 4 eingesetzt wird. Anschließend wird der Deckel 22 wieder geschlossen und der Nutzer kann durch eine entsprechende Eingabe über die Nutzerschnittstelle 14 einen Aufguss starten (vgl. Fig. 1b).

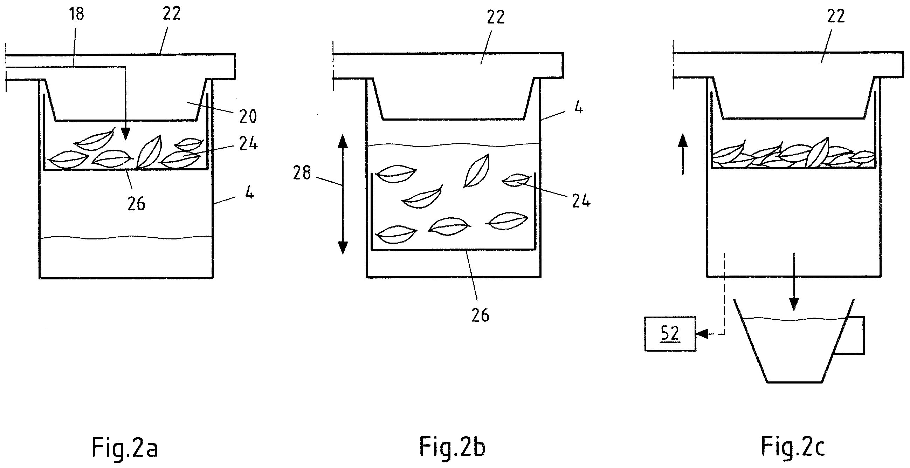

Die Figuren 2a-c zeigen schematisch den Ablauf eines solchen Aufgusses. Zu Beginn des Aufgusses ist der Siebeinsatz 26 mit den Teeblättern 24 wie in Fig. 2a gezeigt oben in der Brühkammer 4 positioniert. Die Steuereinrichtung 10 steuert dann die Heißwasserversorgung 12 an, so dass eine vorgegebene Menge Wasser mit einer vorgegebenen Temperatur über die Zuleitung 18 und den Verteilerkopf 20 in die Brühkammer 4 eingeleitet wird. Weiterhin wird der Siebeinsatz 26 durch eine von der Steuereinrichtung 10 angesteuerte, beispielsweise magnetisch mit dem Siebeinsatz 26 gekoppelte Verfahreinrichtung 28 in die Brühkammer hinabgefahren, so dass die Teeblätter 24 dort wie in Fig. 2b gezeigt mit dem eingeleiteten heißen Wasser in Kontakt kommen. Der Siebeinsatz 26 kann während der Dauer des Aufgusses mit der Verfahreinrichtung 28 verfahren werden, um die Teeblätter 24 im Wasser zu verteilen.

Nach Ablauf einer vorgegebenen Brühdauer steuert die Steuereinrichtung 10 die Verfahreinrichtung 28 an, so dass diese den Siebeinsatz 26 und damit die Teeblätter 24 wie in Fig. 2c gezeigt wieder aus dem Wasser in der Brühkammer 4 heraushebt. Das fertige Teegetränk kann dann auf eine Nutzeranforderung, beispielsweise über die Nutzerschnittstelle 14, oder automatisch mittels eines steuerbaren Ventils 30 durch einen Auslass 32 in eine unterhalb der Brühkammer 4 angeordnete Aufnahme 34 für das fertige Teegetränk, beispielsweise eine Tasse oder eine Kanne, abgefüllt werden. Die Teeblätter 24 können nach Öffnen des Deckels 22 vom Nutzer entnommen und entsorgt werden.

Neben der Durchführung einzelner Aufgüsse ermöglicht der Teeautomat 2 auch die Durchführung mehrerer Aufgüsse mit derselben Zutatenportion. Zu diesem Zweck ist die Steuereinrichtung 10 dazu eingerichtet, den Teeautomaten 2 entsprechend eines Brühprogramms zu steuern, bei dem eine Folge von Aufgüssen mit einer in den Teeautomaten 2 eingefüllten Zutatenportion 24 durchgeführt wird.

Demnach ist der Teeautomat 2 in der Lage, das zuvor anhand der Figuren 2a-c beschriebenen Verfahren mehrfach nacheinander zu wiederholen, ohne dass die Menge Teeblätter 24 zwischenzeitlich entnommen werden muss. Es ist damit möglich, mit ein und derselben Zutatenmenge mehrere Aufgüsse nacheinander zuzubereiten.

Die Steuereinrichtung 10 ist weiterhin dazu eingerichtet, einen Brühparameter eines Aufgusses in der Folge von Aufgüssen abhängig von der Nummer des Aufgusses in der Folge von Aufgüssen einzustellen. Auf diese Weise kann die Steuereinrichtung die Brühparameter für jeden Aufguss in der Folge von Aufgüssen insbesondere derart einstellen, dass jeweils die gewünschte Beschaffenheit des zubereiteten Teegetränks erreicht wird. Beispielsweise kann die Steuereinrichtung 10 dazu eingerichtet sein, die Brühdauer t mit steigender Aufguss-Nummer zu erhöhen. Auf diese Weise wird das Auslaugen der Teeblätter 24 von Aufguss zu Aufguss kompensiert, so dass auch bei späteren Aufgüssen noch ausreichend Geschmacks- und Aromastoffe in das Wasser gelangen.

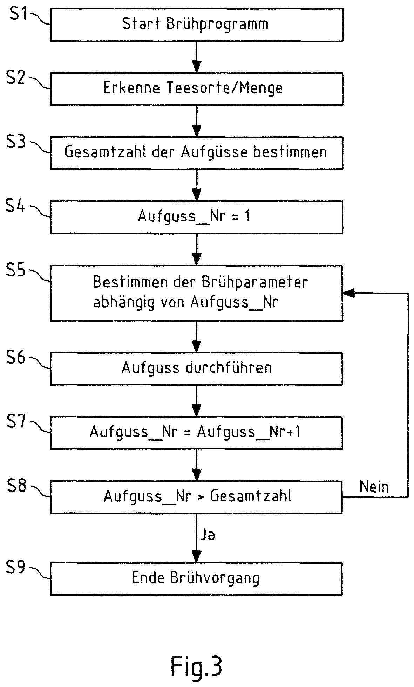

Die Einstellung von Brühparametern abhängig von der Aufguss-Nummer wird nun im Folgenden anhand eines Ausführungsbeispiels des Verfahrens beschrieben, wobei auf das in Figur 3 dargestellte Flussdiagramm Bezug genommen wird.

Figur 3 zeigt ein Flussdiagramm eines Brühprogramms, gemäß dem die Steuereinrichtung 10 den Teeautomaten 2 steuern kann. Zu diesem Zweck können auf dem Speicher 16 Befehle gespeichert sein, deren Ausführung auf der Steuereinrichtung 10 die Durchführung des Teeautomaten 2 entsprechend des Brühprogramms aus Fig. 3 bewirken.

Das Brühprogramm beginnt mit Schritt S1, beispielsweise auf eine entsprechende von der Steuereinrichtung über die Nutzerschnittstelle 14 empfangene Nutzereingabe. Zum Beispiel kann der Nutzer zunächst eine neue Zutatenportion Teeblätter 24 in den Siebeinsatz 26 geben und dann durch eine Nutzereingabe an der Nutzerschnittstelle 14 die Durchführung des gewünschten Brühprogramms starten. Alternativ kann das Brühprogramm auch unmittelbar starten, nachdem ein Schließen des schwenkbaren Deckels 22 detektiert wurde.

Im Schritt S2 wird zunächst die Sorte und/oder die Menge der in den Teeautomaten 2 eingefüllten Zutatenportion 24 erkannt. Zu diesem Zweck weist der Teeautomat 2 eine Sensoreinrichtung 40 mit einer Kamera 42 als optischen Sensor auf, die dazu eingerichtet ist, Bilddaten von in dem Siebeinsatz 26 angeordneten Teeblättern 24 zu erfassen. Diese Bilddaten werden von der Kamera 42 an die Steuereinrichtung 10 übermittelt und dort mittels bildverarbeitungstechnischer Methoden analysiert.

Durch das Bestimmen von Farbe, Form und/oder Größe der Teeblätter 24 kann die Steuereinrichtung insbesondere ermitteln, welche Teesorte in den Siebeinsatz 26 eingefüllt wurde, beispielsweise durch Vergleich der für die Farbe, Form und/oder Größe der Teeblätter 24 bestimmten Werte mit im Speicher 16 hinterlegten Referenzwerten. Weiterhin kann die Steuereinrichtung 10 durch Analyse der Bilddaten die Schüttdichte und/oder das von den Teeblättern 24 eingenommene Volumen im Siebeinsatz 26 bestimmen und daraus die Menge der Zutatenportion ableiten.

Auf diese Weise können Parameter des Brühprogramms automatisch abhängig von der erkannten Teesorte und/oder Zutatenmenge eingestellt werden. Alternativ kann die Steuereinrichtung 10 Werte für die Teesorte und/oder die Zutatenmenge auch über eine entsprechende Nutzereingabe über die Nutzerschnittstelle 14 empfangen. Auf die Sensoreinrichtung 40 kann dann auch verzichtet werden.

Aus den erkannten Werten für die Teesorte und/oder die Zutatenmenge bestimmt die Steuereinrichtung 10 im Schritt S3 die Gesamtzahl der mit der Zutatenportion 24 durchzuführenden Aufgüsse. Zu diesem Zweck ist im Speicher 16 vorzugsweise eine Datenbank hinterlegt, aus der sich die Gesamtzahl der Aufgüsse abhängig von der erkannten Teesorte und Zutatenmenge auslesen lässt.

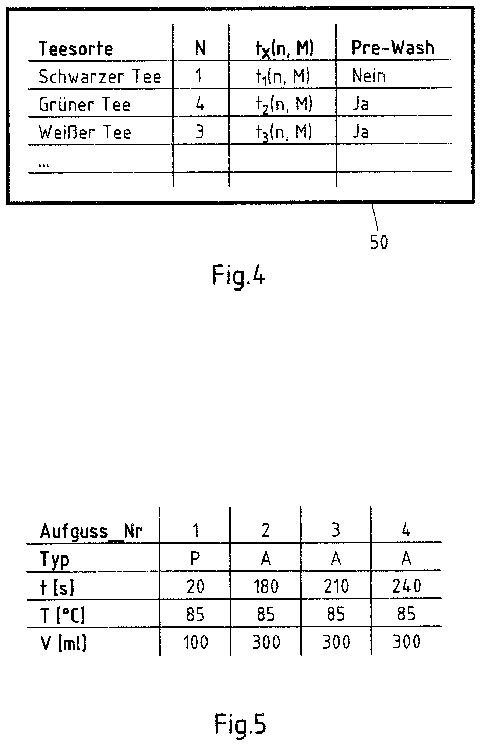

Figur 4 zeigt eine schematische Darstellung eines Beispiels für eine solche Datenbank 50. In der ersten Spalte der Datenbank sind verschiedene Teesorten aufgeführt (Schwarzer Tee, Grüner Tee usw). Anstelle der hier aus Darstellungsgründen verwenden Klarnamen der Teesorten kann die Datenbank natürlich auch einen vorgegebenen Code für die jeweiligen Teesorten enthalten.

Jeder Teesorte ist in der zweiten Spalte jeweils eine zugehörige Gesamtzahl an Aufgüssen zugeordnet, die mit der betreffenden Teesorte durchgeführt werden kann. Gemäß Datenbank 50 hängt die Gesamtzahl der Aufgüsse nur von der Teesorte ab. Alternativ kann die Gesamtzahl auch von der Zutatenmenge abgeben.

Hat die Steuereinrichtung 10 in Schritt S2 über die Sensoreinrichtung 40 nun beispielsweise einen grünen Tee erkannt, so liest sie im Schritt S3 aus der Datenbank 50 entsprechend die Zahl "4" für die Gesamtzahl der Aufgüsse aus.

Im Schritt S4 wird nun ein Zähler für die Aufguss-Nummer ("Aufguss-Nr") initialisiert, indem er auf den Wert 1 gesetzt wird. Der Zähler "Aufguss-Nr" zeigt jeweils die Nummer des aktuellen Aufgusses in der Folge von Aufgüssen an.

Im Schritt S5 werden zur Durchführung eines (nächsten) Aufgusses die Brühparameter abhängig von der Nummer des jeweiligen Aufgusses, d.h. als Funktion des Werts von "Aufguss_Nr" bestimmt. Zu diesem Zweck greift die Steuereinrichtung 10 wiederum auf die Datenbank 50 zu, die in der dritten Spalte jeder Teesorte eine Funktion tx(n, M) zuordnet, die die Brühdauer abhängig von der Nummer des Aufgusses n und der Zutatenmenge M zurückgibt. "X" in tx steht für "1", "2", "3" etc. (vgl. Fig. 4) und macht vorliegend die Funktion für eine Teesorte von den Funktionen für andere Teesorten unterscheidbar.

Die Steuereinrichtung wählt abhängig von dem erkannten oder empfangenen Wert für die Teesorte die zugehörige Funktion tx(n, M) aus, bestimmt deren Wert für die aktuelle Aufguss-Nr (n = Aufguss_Nr) und für die erkannte oder empfangene Zutatenmenge M. Der auf diese Weise erhaltene Wert wird dann von der Steuereinrichtung 10 als Brühdauer für den nächsten Aufguss eingestellt.

Anstelle oder zusätzlich zur Brühdauer t können auch andere Brühparameter wie die Brühtemperatur T oder das Wasservolumen V abhängig von "Aufguss_Nr", der Teesorte und/oder der Zutatenmenge M eingestellt werden. Zu diesem Zweck kann die Datenbank 50 entsprechend weitere Funktionen Tx(n, M) oder Vx(n, M) enthalten.

Mit den von der Steuereinrichtung 10 auf diese Weise eingestellten Brühparametern wird dann im Schritt S6 der Aufguss durchgeführt, analog zu dem oben anhand der Fig. 2a-c beschrieben Verfahren. Am Ende des Aufgusses kann das in der Brühkammer 6 zubereitete Teegetränk dann in eine Aufnahme 34 für ein Teegetränk, wie zum Beispiel eine Tasse oder Kanne, ausgegeben werden, beispielsweise auf entsprechende Anforderung durch den Nutzer über die Nutzerschnittstelle 14.

Die Zutatenmenge 24 verbleibt am Ende des Aufgusses im Siebeinsatz 26. Zu diesem Zweck kann der Deckel 22 beispielsweise mittels ansteuerbarer Verriegelungsmittel (nicht dargestellt) während des laufenden Brühprogramms verriegelt werden, so dass ein Nutzer den Deckel 22 nicht öffnen und die Zutatenportion vorzeitig entnehmen kann. Alternativ kann mittels eines Sensors (nicht dargestellt) auch ein Öffnen des Deckels 22 erkannt werden oder mit der Kamera 42 die Entnahme der Zutatenportion 24 erkannt werden. Die Steuerungseinrichtung kann beispielsweise dazu eingerichtet sein, bei Öffnen des Deckels 22 oder Entnahme der Zutatenportion 24 den Brühvorgang vorzeitig zu beenden.

Im Schritt S7 wird der Zähler "Aufguss-Nr" um den Wert 1 erhöht, so dass sein Wert der Nummer des nächsten Aufgusses entspricht.

Im Schritt S8 wird dann überprüft, ob die Nummer des nächsten Aufgusses die zuvor bestimmte Gesamtzahl an Aufgüssen überschreitet. Ist dies der Fall, wird das Brühprogramm in Schritt S9 beendet. Andernfalls springt das Brühprogramm zurück zum Schritt S5, in dem die Brühparameter des nachfolgenden Aufgusses bestimmt werden.

Durch die Steuerung des Teeautomaten 2 anhand des in Figur 3 beschriebenen Brühprogramms kann damit eine Folge von Aufgüssen nacheinander abgearbeitet werden, ohne dass ein Nutzer zwischenzeitlich eingreifen muss, um die Brühparameter der Aufgüsse anzupassen.

Figur 5 zeigt nun ein Beispiel für den Durchlauf des Brühprogramms aus Figur 3 an einem konkreten Beispiel zur Zubereitung von grünem Tee in Form einer Tabelle mit Parametern für die einzelnen Aufgüsse des Brühprogramms.

Das Brühprogramm für den grünen Tee in Fig. 5 umfasst vier aufeinanderfolgende Aufgüsse, wobei die erste Zeile der Tabelle den zugehörigen Wert des Zählers "Aufguss-Nr" anzeigt. Die zweite Zeile der Tabelle zeigt den jeweiligen Typ des Aufgusses an. Bei dem ersten Aufguss handelt es sich um einen Waschvorgang (Pre-Wash-Aufguss, gekennzeichnet durch den Buchstaben "P") und bei dem zweiten bis vierten Aufguss um reguläre Aufgüsse zur Zubereitung eines zu konsumierenden Teegetränks (gekennzeichnet durch den Buchstaben "A"). In den weiteren Zeilen der Tabelle sind die Werte für die Brühparameter Brühdauer t, Brühtemperatur T und Wasservolumen V aufgeführt, die von der Steuereinrichtung 10 für jeden Aufguss bestimmt werden, beispielsweise anhand der Datenbank 50 in Fig. 4.

Der erste Pre-Wash-Aufguss dient dazu, die zunächst trocken in den Siebeinsatz 26 eingefüllten Teeblätter 24 anzufeuchten und für nachfolgende Aufgüsse aufzuschließen. Aus diesem Grund ist die Brühdauer t nur sehr kurz, um ein vorzeitiges Auslaugen der Teeblätter zu verhindern. Auch das Wasservolumen V ist für den Pre-Wash-Aufguss geringer gewählt.

Da das Wasser des Pre-Wash-Aufgusses nicht zum Konsum gedacht ist, kann die Steuereinrichtung 10 dazu eingerichtet sein, bei einem Pre-Wash-Aufguss die Wassermenge aus der Brühkammer 4 automatisch in einen Abwasserbehälter 52 des Teeautomaten zu leiten, wie es in Figur 2c dargestellt ist.

Bei dem nachfolgenden zweiten Aufguss handelt es sich um den ersten Aufguss zur Zubereitung eines Teegetränks. Wie aus Figur 5 ersichtlich, steigt die Brühdauer t vom zweiten zum vierten Aufguss sukzessive an. Auf diese Weise wird das fortschreitende Auslaugen der Teeblätter kompensiert, so dass die zubereiteten Teegetränke auch bei späteren Aufgüssen wie dem dritten oder vierten Aufguss ausreichend Aroma- und Geschmacksstoffe enthalten.

Dadurch, dass der Anstieg der Brühdauer von der Steuereinrichtung 10 automatisch bewirkt wird, kann mit dem Teeautomaten 2 damit eine gleichbleibende Teequalität erreicht werden, ohne dass ein Nutzer hierzu manuell in den Prozess eingreifen muss.

## Patentansprüche

1. Teeautomat (2), eingerichtet zur automatischen Zubereitung eines Teegetränks in einer Brühkammer (4),
- mit einer Steuereinrichtung (10), die dazu eingerichtet ist, den Teeautomaten (2) entsprechend eines Brühprogramms zu steuern, bei dem eine Folge von Aufgüssen mit einer in den Teeautomaten (2) eingefüllten Zutatenportion (24) durchgeführt wird,
**dadurch gekennzeichnet,**
- **dass** die Steuereinrichtung (10) dazu eingerichtet ist, einen Brühparameter (t, T, V) für einen Aufguss in der Folge von Aufgüssen abhängig von der Nummer des Aufgusses (Aufguss_Nr) in der Folge von Aufgüssen einzustellen, wobei die Steuereinrichtung (10) dazu eingerichtet ist, die Brühdauer (t) eines Aufgusses in der Folge von Aufgüssen abhängig von der Nummer (Aufguss_Nr) des Aufgusses in der Folge von Aufgüssen einzustellen.

2. Teeautomat nach Anspruch 1,
**dadurch gekennzeichnet, dass** die Steuereinrichtung (10) dazu eingerichtet ist, die Nummer eines Aufgusses (Aufguss_Nr) mit einer Gesamtzahl (N) der mit der einen Zutatenportion (24) durchzuführenden Aufgüsse zu vergleichen und das Brühprogramm bei Erreichen der Gesamtzahl (N) zu beenden.

3. Teeautomat nach Anspruch 1 oder 2,
**dadurch gekennzeichnet,**
- **dass** der Teeautomat (2) eine Zutatenportion-Erkennungseinrichtung (42) aufweist, die dazu eingerichtet ist, einen Wert für die Sorte und/oder einen Wert für die Menge einer in den Teeautomat eingefüllten Zutatenportion (24) zu bestimmen, und
- **dass** die Steuereinrichtung (10) dazu eingerichtet ist, einen Parameter des Brühprogramms abhängig von dem Wert für die Sorte und/oder von dem Wert für die Menge der Zutatenportion (24) einzustellen.

4. Teeautomat nach Anspruch 3,
**dadurch gekennzeichnet,**
- **dass** die Steuereinrichtung (10) dazu eingerichtet ist, einen Brühparameter (t, T, V) eines Aufgusses in der Folge von Aufgüssen abhängig von der Nummer des Aufgusses (Aufguss_Nr) in der Folge von Aufgüssen und abhängig von dem Wert für die Sorte und/oder von dem Wert für die Menge der Zutatenportion einzustellen.

5. Teeautomat nach Ansprüche 3 oder 4,
**dadurch gekennzeichnet,**
- **dass** die Steuereinrichtung (10) dazu eingerichtet ist, die Gesamtzahl (N) der mit der einen Zutatenportion (24) durchzuführenden Aufgüsse abhängig von dem Wert für die Sorte und/oder von dem Wert für die Menge der Zutatenportion (24) zu bestimmen.

6. Teeautomat nach einem der Ansprüche 1 bis 5,
**dadurch gekennzeichnet,**
- **dass** die Steuereinrichtung (10) dazu eingerichtet ist, den Teeautomaten (2) zur Durchführung eines Waschaufgusses zum Waschen der Zutatenportion (24) zu veranlassen, insbesondere als erster Aufguss der Folge von Aufgüssen.

7. Teeautomat nach Anspruch 6,
**dadurch gekennzeichnet, dass** der Waschaufguss umfasst: Einleiten einer Wassermenge in die Brühkammer (4), Abführen der Wassermenge aus der Brühkammer (4) in einen Abwasserbehälter (52).

8. Teeautomat nach einem der Ansprüche 1 bis 7,
**dadurch gekennzeichnet,**
- **dass** der Teeautomat (2) eine Entnahme-Erkennungseinrichtung (42) aufweist, die dazu eingerichtet ist, die Entnahme einer Zutatenportion (24) aus dem Teeautomaten (2) zu detektieren.

9. Teeautomat nach einem der Ansprüche 1 bis 8,
**dadurch gekennzeichnet, dass** die Steuereinrichtung (10) dazu eingerichtet ist, den Teeautomaten (2) derart zu steuern, dass ein Verfahren nach einem der Ansprüche 10 bis 13 durchgeführt wird.

10. Verfahren zum Betrieb eines Teeautomaten (2), insbesondere eines Teeautomaten nach einem der Ansprüche 1 bis 9,
- bei dem eine Folge von Aufgüssen mit einer in den Teeautomaten (2) gefüllten Zutatenportion (24) durchgeführt wird,
- bei dem ein Brühparameter (t, T, V) für einen Aufguss in der Folge von Aufgüssen abhängig von der Nummer des Aufgusses (Aufguss_Nr) in der Folge von Aufgüssen eingestellt wird, wobei die Brühdauer (t) eines Aufgusses in der Folge von Aufgüssen abhängig von der Nummer (Aufguss_Nr) des Aufgusses in der Folge von Aufgüssen eingestellt wird, und
- bei dem der Aufguss entsprechend des eingestellten Brühparameters (t, T, V) durchgeführt wird.

11. Verfahren nach Anspruch 10,
- bei dem ein Wert für die Sorte und/oder ein Wert für die Menge einer in den Teeautomat (2) eingefüllten Zutatenportion (24) bestimmt wird und
- bei dem der Brühparameter (t, T, V) für den einen Aufguss in der Folge von Aufgüssen abhängig von der Nummer des Aufgusses (Aufguss_Nr) in der Folge von Aufgüssen und abhängig von dem Wert für die Sorte und/oder dem Wert für die Menge eingestellt wird.

12. Verfahren nach Anspruch 10 oder 11,
- bei dem ein Wert für die Sorte und/oder ein Wert für die Menge einer in den Teeautomat (2) eingefüllten Zutatenportion (24) bestimmt wird und
- bei dem die Gesamtzahl (N) der mit der einen Zutatenportion (24) durchzuführenden Aufgüsse abhängig von dem Wert für die Sorte und/oder dem Wert für die Menge bestimmt wird.

13. Verfahren nach einem der Ansprüche 10 bis 12,
- bei dem als erster Aufguss in der Folge von Aufgüssen ein Waschaufguss durchgeführt wird, bei dem eine Wassermenge in eine Brühkammer (4) und anschließend aus der Brühkammer (4) in einen Abwasserbehälter (52) geleitet wird.

## Claims

1. Automatic tea maker (2) configured to automatically prepare a tea beverage in a brewing chamber (4),
- with a control device (10) configured to control the automatic tea maker (2) according to a brewing program in which a series of infusions is carried out with an ingredients portion (24) filled into the automatic tea maker (2),
**characterised in that**
- the control device (10) is configured to set a brewing parameter (t, T, V) for an infusion in the series of infusions as a function of the number of the infusion (Aufguss_Nr) in the series of infusions, wherein the control device (10) is configured to set the brewing time (t) of an infusion in the series of infusions as a function of the number (Aufguss_Nr) of the infusion in the series of infusions.

2. Automatic tea maker according to claim 1, **characterised in that** the control device (10) is configured to compare the number of an infusion (Aufguss_Nr) with a total number (N) of the infusions to be carried out with an ingredients portion (24) and to end the brewing program when the total number (N) has been reached.

3. Automatic tea maker according to claim 1 or 2, **characterised in that**
- the automatic tea maker (2) has an ingredients portion detection device (42) configured to determine a value for the type and/or a value for the quantity of an ingredients portion (24) filled into the automatic tea maker, and
- the control device (10) is configured to set a parameter of the brewing program as a function of the value for the type and/or the value for the quantity of the ingredients portion (24).

4. Automatic tea maker according to claim 3, **characterised in that**
- the control device (10) is configured to set a brewing parameter (t, T, V) for an infusion in the series of infusions as a function of the number of the infusion (Aufguss_Nr) in the series of infusions and as a function of the value for the type and/or the value for the quantity of the ingredients portion.

5. Automatic tea maker according to claim 3 or 4, **characterised in that**
- the control device (10) is configured to determine the total number (N) of the infusions to be carried out with an ingredients portion (24) as a function of the value for the type and/or the value for the quantity of the ingredients portion (24).

6. Automatic tea maker according to any one of claims 1 to 5, **characterised in that**
- the control device (10) is configured to cause the automatic tea maker (2) to carry out a washing infusion to wash the ingredients portion (24), in particular as a first infusion in the series of infusions.

7. Automatic tea maker according to claim 6, **characterised in that** the washing infusion comprises: introducing a quantity of water into the brewing chamber (4), discharging the quantity of water from the brewing chamber (4) into a waste water container (52).

8. Automatic tea maker according to any one of claims 1 to 7, **characterised in that**
- the automatic tea maker (2) has a removal detection device (42) configured to detect the removal of an ingredients portion (24) from the automatic tea maker (2).

9. Automatic tea maker according to any one of claims 1 to 8, **characterised in that** the control device (10) is configured to control the automatic tea maker (2) such that a method according to any one of claims 10 to 13 is carried out.

10. Method of operating an automatic tea maker (2), in particular an automatic tea maker according to any one of claims 1 to 9,
- in which a series of infusions is carried out with an ingredients portion (24) filled into the automatic tea maker (2),
- in which a brewing parameter (t, T, V) is set for an infusion in the series of infusions as a function of the number of the infusion (Aufguss_Nr) in the series of infusions, wherein the brewing time (t) of an infusion in the series of infusions is set as a function of the number (Aufguss_Nr) of the infusion in the series of infusions and
- in which the infusion is carried out according to the set brewing parameter (t, T, V).

11. Method according to claim 10,
- in which a value is determined for the type and/or a value for the quantity of an ingredients portion (24) filled into the automatic tea maker (2) and
- in which the brewing parameter (t, T, V) is set for the one infusion in the series of infusions as a function of the number of the infusion (Aufguss_Nr) in the series of infusions and as a function of the value for the type and/or the value for the quantity.

12. Method according to claim 10 or 11,
- in which a value for the type and/or a value for the quantity of an ingredients portion (24) filled into the automatic tea maker (2) is determined and
- in which the total number (N) of the infusions to be carried out with the one ingredients portion (24) is determined as a function of the value for the type and/or the value for the quantity.

13. Method according to any one of claims 10 to 12,
- in which a washing infusion is carried out as the first infusion in the series of infusions in which a quantity of water is introduced into a brewing chamber (4) and then drained out of the brewing chamber (4) into a waste water container (52).

## Revendications

1. Machine à thé (2) conçue pour préparer automatiquement une boisson à base de thé dans une chambre d'infusion (4),
- avec un dispositif de commande (10) conçu de sorte à commander la machine à thé (2) conformément à un programme d'infusion, dans lequel programme une série d'infusions est effectuée avec une ration d'ingrédients (24) chargée dans la machine à thé (2),
**caractérisée**
- **en ce que** le dispositif de commande (10) est conçu de sorte à régler un paramètre d'infusion (t, T, V) pour une infusion dans la série d'infusions en fonction du numéro de l'infusion (Aufguss_Nr) dans la série d'infusions, le dispositif de commande (10) étant conçu de sorte à régler la durée d'infusion (t) d'une infusion dans la série d'infusions en fonction du numéro (Aufguss_Nr) de l'infusion dans la série d'infusions.

2. Machine à thé selon la revendication 1,
**caractérisée en ce que** le dispositif de commande (10) est conçu de sorte à comparer le numéro d'une infusion (Aufguss_Nr) à un nombre total (N) d'infusions à effectuer avec ladite ration d'ingrédients (24) et à terminer le programme d'infusion lorsque de l'atteinte du nombre total (N).

3. Machine à thé selon la revendication 1 ou 2,
**caractérisée**
- **en ce que** la machine à thé (2) présente un dispositif de détection de ration d'ingrédients (42) qui est conçu de sorte à déterminer une valeur pour la variété et/ou une valeur pour la quantité d'une ration d'ingrédients (24) chargée dans la machine à thé, et
- **en ce que** le dispositif de commande (10) est conçu de sorte à régler un paramètre du programme d'infusion en fonction de la valeur pour la variété et/ou de la valeur pour la quantité de la ration d'ingrédients (24).

4. Machine à thé selon la revendication 3,
**caractérisée en ce que**
- le dispositif de commande (10) est conçu de sorte à régler un paramètre d'infusion (t, T, V) d'un infusion dans la série d'infusions en fonction du numéro de l'infusion (Aufguss_Nr) dans la série d'infusions et en fonction de la valeur pour la variété et/ou de la valeur pour la quantité de la ration d'ingrédients.

5. Machine à thé selon la revendication 3 ou 4,
**caractérisée en ce que**
- le dispositif de commande (10) est conçu de sorte à déterminer le nombre total (N) d'infusions à effectuer avec la ration d'ingrédients (24) en fonction de la valeur pour la variété et/ou de la valeur pour la quantité de la ration d'ingrédients (24).

6. Machine à thé selon l'une des revendications 1 à 5,
**caractérisée en ce que**
- le dispositif de commande (10) est conçu e sorte à permettre à la machine à thé (2) d'effectuer une infusion de lavage pour laver la ration d'ingrédients (24), en particulier en tant que première infusion parmi la série d'infusions.

7. Machine à thé selon la revendication 6,
**caractérisée en ce que** l'infusion de lavage comporte : introduire d'une quantité d'eau dans la chambre d'infusion (4), évacuer une quantité d'eau hors de la chambre d'infusion (4) vers un réservoir d'eau usée (52).

8. Machine à thé selon l'une des revendications 1 à 7,
**caractérisée en ce que** la machine à thé (2) présente un dispositif de détection pour le prélèvement (42) qui est conçu de sorte à détecter le prélèvement d'une ration d'ingrédients (24) hors de la machine à thé (2).

9. Machine à thé selon l'une des revendications 1 à 8,
**caractérisée en ce que** le dispositif de commande (10) est conçu de sorte à commander la machine à thé (2) de telle sorte qu'un procédé selon l'une des revendications 10 à 13 est effectué.

10. Procédé pour l'utilisation d'une machine à thé (2), en particulier d'une machine à thé selon l'une des revendications 1 à 9,
- dans lequel une série d'infusions est effectuée avec une ration d'ingrédients (24) chargée dans la machine à thé (2),
- dans lequel un paramètre d'infusion (t, T, V) pour une infusion dans la série d'infusions est réglé en fonction du numéro de l'infusion (Aufguss_Nr) dans la série d'infusions, la durée d'infusion (t) d'une infusion dans la série d'infusions étant réglée en fonction du numéro (Aufguss_Nr) de l'infusion dans la série d'infusions, et
- dans lequel l'infusion est effectuée conformément au paramètre d'infusion réglé (t, T, V).

11. Procédé selon la revendication 10,
- dans lequel une valeur pour la variété et/ou une valeur pour la quantité d'une ration d'ingrédients (24) chargée dans la machine à thé (2) est déterminée et
- dans lequel le paramètre d'infusion (t, T, V) pour une infusion dans la série d'infusions est réglé en fonction du numéro de l'infusion (Aufguss_Nr) dans la série d'infusions et en fonction de la valeur pour la variété et/ou de la valeur pour la quantité.

12. Procédé selon la revendication 10 ou 11,
- dans lequel une valeur pour la variété et/ou une valeur pour la quantité d'une ration d'ingrédients (24) chargée dans la machine à thé (2) est déterminée et
- dans lequel le nombre total (N) d'infusions à effectuer avec une ration d'ingrédients (24) est déterminé en fonction de la valeur pour la variété et/ou en fonction de la valeur pour la quantité.

13. Procédé selon l'une des revendications 10 à 12,
- dans lequel une infusion de lavage est effectuée en tant que première infusion dans la série d'infusions,, lors de laquelle infusion de lavage une quantité d'eau est conduite dans une chambre d'infusion (4) et ensuite hors de la chambre
- d'infusion (4) dans un réservoir d'eau usée (52).
